# EUROPEAN PATENT APPLICATION

(11) **EP 2 015 032 A1**
(43) Date of publication of application: **14.01.2009**
(21) Application number: 07252809.4
(22) Date of filing: 13.07.2007
(51) Int. Cl.: G01D 7/04, G01D 4/02

(54) **Indicating power consumption and generation**

(71) Applicant: Solar Century Holdings Limited, London SE1 7AB (GB)
(72) Inventor: Orme, Sophie Kate, London SW19 4LG (GB)
(74) Representative: Atkinson, Ralph

(57) **Abstract**

A display apparatus has a first indicator (701) configured to indicate a level of energy/power consumption and a second indicator (702) configured to indicate a level of energy/power generation. The first indicator and the second indicator are arranged in close proximity to facilitate a comparison between power consumption and power generation. In a preferred embodiment, the indicators are shown against a shared logarithmic scale, thereby giving greater emphasis to lower levels and lesser emphasis to higher levels to facilitate a useful comparison during the majority of operating conditions.

## Description

The present invention relates to a display apparatus of the type comprising a first indicator configured to indicate a level of energy/power consumption and a second indicator configured to indicate a level of energy/power generation.

Display apparatus are known that are configured to display a level of energy or power consumption to a domestic user. In this way, it is possible for a user to be made aware of the extent to which they are consuming power and, where appropriate, allowing them to take appropriate measures in order to reduce power consumption. Thus, for example, when leaving a residence, an occupier may notice the power consumption appears to be abnormally high which would in turn suggest that an appliance has been left on by mistake.

Some power users also generate electrical power locally from solar panels and other generation apparatus. The desirability of showing power consumption and generation has been identified. However, difficulties exist in terms of presenting this information in a meaningful way.

According to an aspect of the present invention, there is provided a display apparatus of the aforesaid type, characterised in that said first indicator and said second indicator are arranged in close proximity to facilitate a comparison between power consumption and power generation; and said first indicator and/or said second indicator are shown against a non-linear scale that gives greater emphasis to lower levels and lesser emphasis to higher levels.

Many non-linear functions are available that achieve the desired result, however, in a preferred embodiment the non-linear scale is logarithmic.

It is possible for each indicator to be provided with its own scale, one or both of which may be non-linear but in a preferred embodiment the first indicator for consumption shares the same non-linear scale with the second indicator for generation.

The invention will now be described by way of example only with reference to the accompanying drawings, of which:
Figure 1 shows a domestic residence in which a user is taking a glance at energy display devices;
Figure 2 shows a schematic representation of a power system installed within the environment of Figure 1;
Figure 3 details a processor identified in Figure 2;
Figure 4 details procedures performed by the processor identified in Figure 3;
Figure 5 details a service generation procedure identified in Figure 4;
Figure 6 details an alternative routine identified in Figure 4;
Figure 7 shows a preferred implementation of a display device; and
Figure 8 shows an alternative display device.

### Figure 1

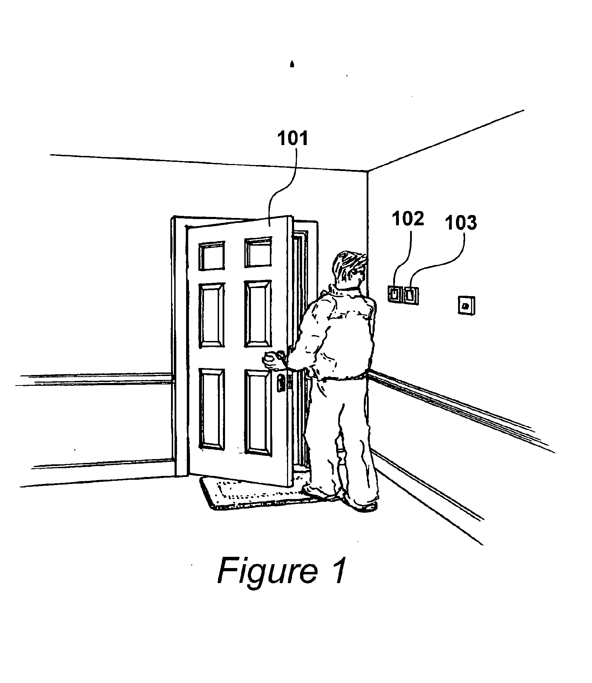

A domestic residence is illustrated in Figure 1 in which a user has opened a front door 101 and is about to leave. Before actually leaving the residence, the user takes a glance at energy display devices 102 and 103. In this preferred embodiment, device 102 includes a first indicator configured to indicate a level of energy/power consumption along with a second indicator configured to indicate a level of energy/power generation. Furthermore, the first indicator and the second indicator are arranged in close proximity to facilitate a comparison between power consumption and power generation.

Furthermore, in this preferred embodiment, the second display 103 is provided configured to indicate solar-thermal generation.

### Figure 2

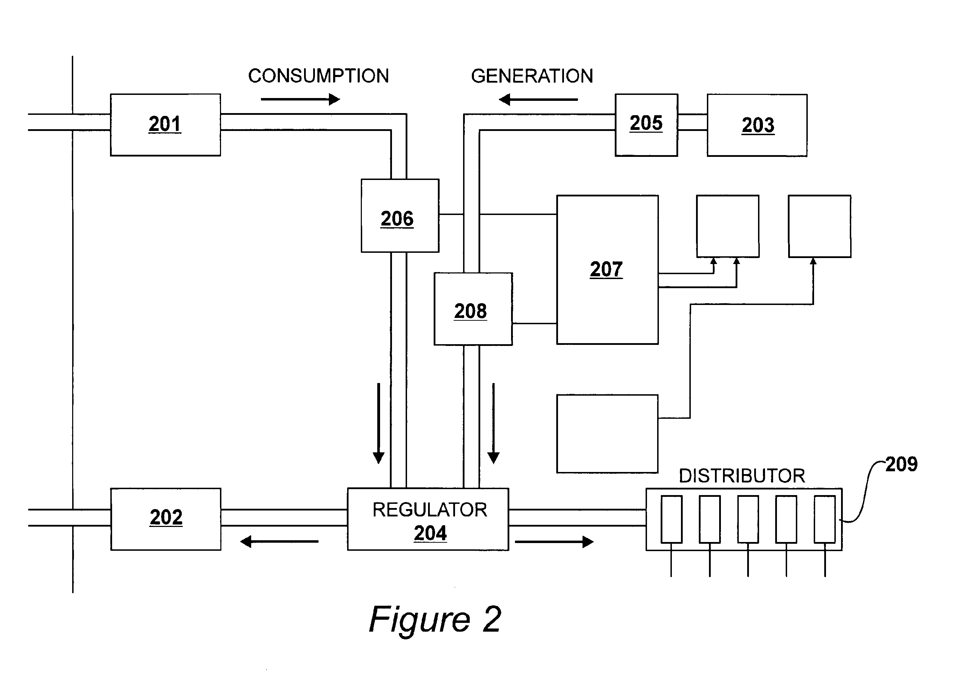

A schematic representation of the electrical power system installed within the environment of Figure 1 is illustrated in Figure 2.

A first interface 201 receives power from an external source and a similar output interface 202 supplies generated power to the external source. In many countries, local power generation from renewable sources is being encouraged therefore it is possible for a resident to obtain payment for power supplied to the external source at a rate higher than the resident must pay for receiving power from the external source, such as a national grid. Consequently, a resident may gain financially if the environment is optimised so as to maximise power generation while at the same time minimising power consumption.

In this example, electrical power is generated by an array of photo-voltaic solar collectors 203, possibly mounted on the roof of the residence. The photo-voltaic generators generate a varying direct current supply that is converted to alternating current and generally regulated by an inverter 204. Received power from the grid, via input interface 201 is supplied to a regulator 204, which also receives generated power from the inverter 205. A first power measuring device 206 measures consumed power and provides an indication of this consumed power to a processor 207. Similarly, a second measuring device 208 measures generated power and also supplies an indication of this generated power to the processor 207.

Regulator 204 receives power both from the external supply and from the generated source. Power is received from regulator 204 and supplied to distributor 209, usually including a collection of fuses or circuit breakers etc. The regulator 204 is configured to ensure that the internal requirements are always met and that priority is given to supplying power to the distributor 209. Ideally, all of this power is provided by the generated power received from invertor 205. In reality, it is likely that power will be required from the external source when activities are occurring within the dwelling whereas at other times, particularly during the day, power will be supplied via regulator 204 to the output interface 202.

As is well known with environments of this type, peak internal consumption demands tend to be relatively high but for short durations, whereas generated power tends to be of a lower level but for longer durations such that, throughout the day, the overall sum may be positive in that more power is being generated and supplied to the external grid compared to the total amount of power received from the grid. However, in order to encourage the development of this situation, it is advantageous for a user to be presented with information, particularly when a user is about to leave their residence, so as to ensure that optimum use is being made of the power generating capabilities.

### Figure 3

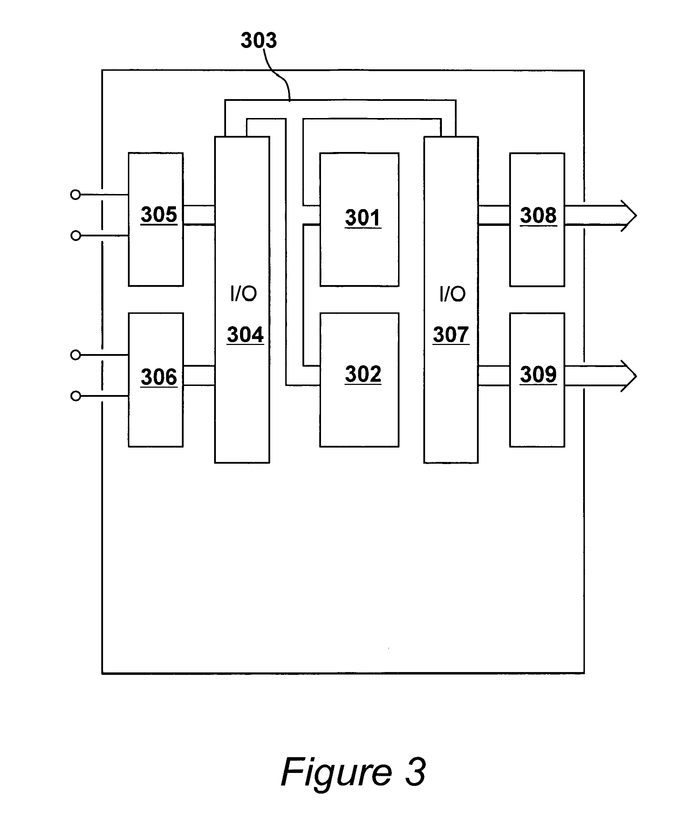

Processor 207 is detailed in Figure 3 and includes a central processing unit 301, such as an appropriately programmed PIC processor.

Processing unit 301 is connected to an internal memory device 302 via a system bus 303. An input interface 304 interfaces input devices 305 and 306 to the system bus 203. Similarly, output interface 307 interfaces output circuits 308 and 309 to the system bus 303.

Input circuits 305 and 306 may be configured to receive input voltages and to perform an analog to digital conversion so as to supply digital signals to the input interface 304. Output circuits 308 and 308 may perform a latching function such that they are periodically supplied with an output value which is then latched and maintained as an output value until the next updated value is received.

### Figure 4

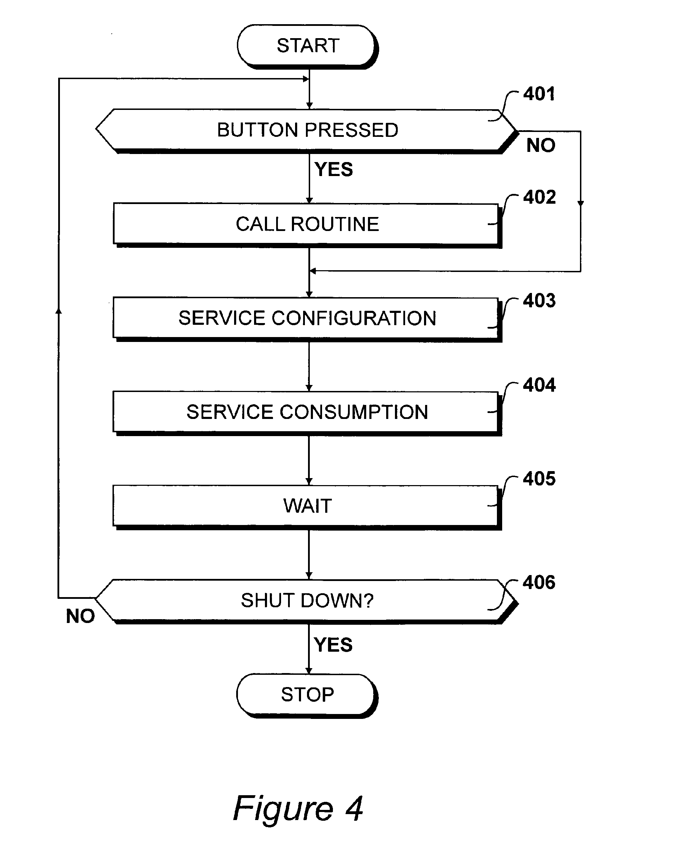

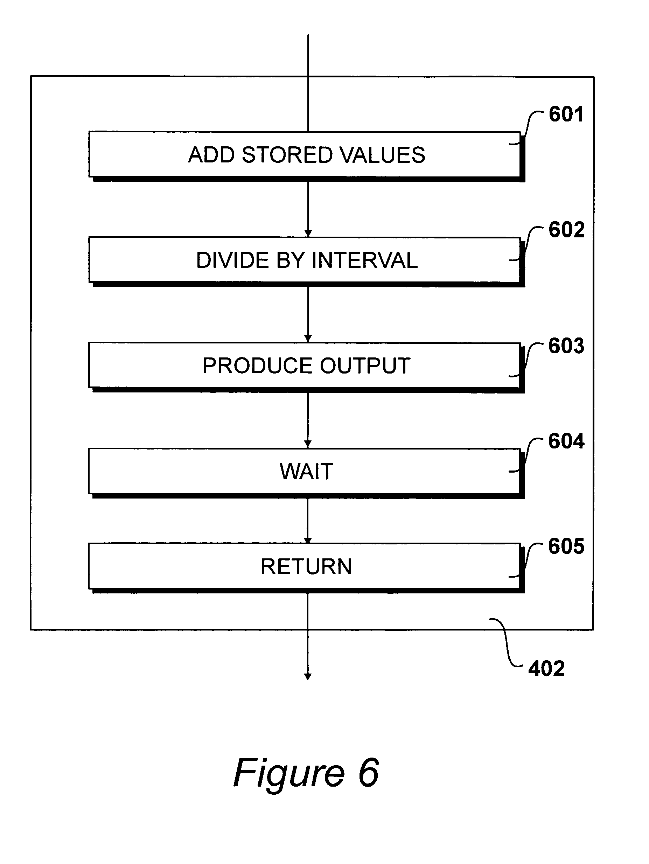

Procedures performed by processing unit 301 are detailed in Figure 4. In a preferred embodiment, the display device includes a button which when pressed makes a change to displayed values such that average daily generation/consumption values are displayed in preference to instantaneous power values. After initiation of the process, a question is asked at step 401 as to whether this button has been pressed. If answered in the affirmative, an appropriate routine is called, as detailed in Figure 6. Alternatively, if a press is not detected, the question asked at step 401 is answered in the negative resulting in control being directed to step 403.

At step 403, power generation calculations are serviced whereafter at step 404 consumption calculations are serviced.

The operation of steps 403 and 404 are performed on a periodic basis (possibly every second) therefore a wait state is entered at step 405.

After completing the wait state at step 405, a question is asked at step 406 as to whether a shutdown command has been received resulting in the process terminating when answered in the affirmative. Alternatively, when answered in the negative, control is returned to step 401 and the procedure is repeated.

### Figure 5

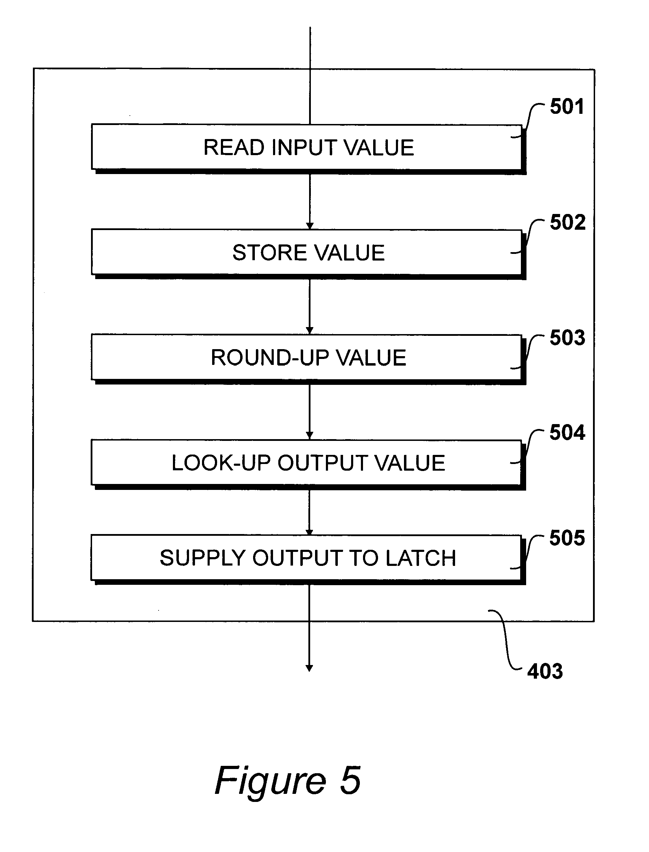

Service generation procedures at step 403 are substantially similar to service consumption procedures at step 404. Procedures 403 will be described with respect to Figure 5, it being appreciated that these are substantially similar to consumption procedures at step 404.

At step 501 a generation input value is read derived from monitoring device 208 and digitised by circuit 305.

At step 502 the value is stored in a fashion which effectively associates the stored value with a time at which the value was taken. In this way it is possible for averaging procedures to be effected, as detailed with respect to Figure 6.

At step 503 a rounding up process is performed so as to generate an integer value. This integer value (with rounding) approximates a linear representation of the degree of power being generated. However, in accordance with a preferred aspect of the present invention, the representation is scaled in a non-linear fashion so as to provide greater emphasis on lower levels of generation/consumption and lesser emphasis on higher levels of generation/consumption. The look up table stored within memory device 302 allows any non-linear function of this type to be implemented. However, in a preferred embodiment the relationship is substantially logarithmic.

Having generated the logarithmic representation at step 504, the resulting output is supplied to latch 308. The output value is held within latch 308 thereby maintaining a constant signal to the display device until the next refresh occurs, typically one second later.

### Figure 6

The routine called at step 402 is detailed in Figure 6. In response to the integration button being pressed, instantaneous power values are replaced with an average power value, that may also be interpreted as an energy value representing the total sum of energy generated over a predetermined period, such as a day, a week or a month.

At step 601 stored values read from memory device 302 are added together. Thereafter at step 602 the sum is divided by the length of the interval, thereby producing a daily average. An output is produced at step 603 and provided to latch 308. The display is maintained for a predetermined period of time by the process entering a wait state at step 604 whereafter control is returned at step 605.

### Figure 7

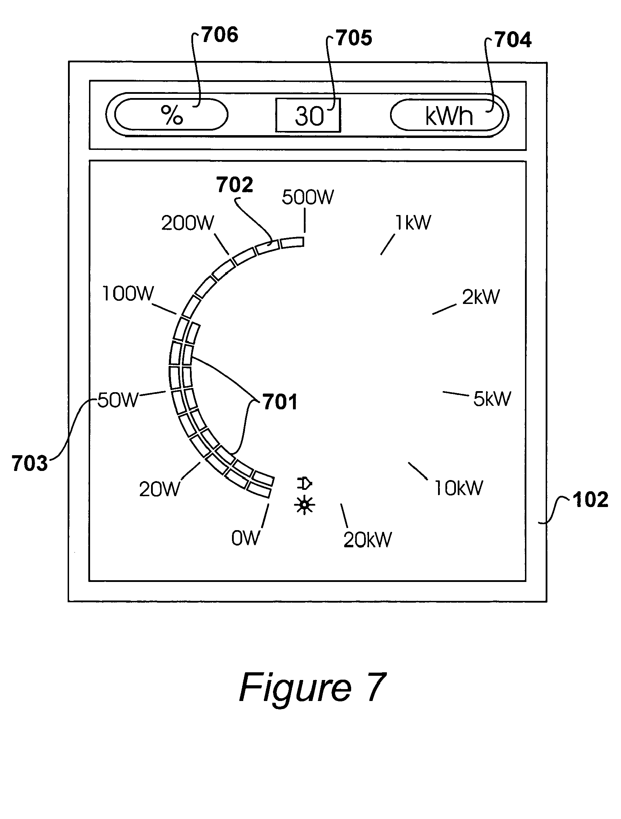

A preferred implementation of display device 102 is illustrated in Figure 7. In the preferred embodiment, the display is implemented using light emitting devices, such as light emitting diodes. The diodes are arranged in a substantially circular locus and represent a range of power generation/consumption values ranging from zero watt to 20 kilowatt.

A first indicator is defined by a locus of light emitting diodes 701. In a preferred embodiment, diodes 701 have a specific colour, possibly blue, representing power consumption.

Radially displaced from diodes 701 there is provided a second locus of diodes 702, preferably having a different colour from diodes 701. In a preferred embodiment, the outer circular locus of diodes 701 is implemented using yellow diodes, representing solar generation.

As shown in the embodiment of Figure 7, the first indicator (diodes 701) and the second indicator (diodes 792) are arranged in close proximity so as to facilitate a comparison between power consumption and power generation. Thus, in the exemplar embodiment of Figure 7, a situation exists in which a total of 500 watt of power are being generated (illustrated by the illumination of yellow LEDs) up to the 500 watt level, whereas 100 watt of power are being consumed, represented by the illumination of blue LEDs up to the 100 watt level.

It should be appreciated that the embodiment of Figure 7 represents a preferred example of display devices that achieve this effect. In an alternative arrangement, it is possible to show a complete region, such as a square, being populated by coloured LEDs, the total number of which are illuminated being dependent upon the degree of power consumption/generation. As generation increases, more yellow LEDs would be illuminated and as consumption increases more blue LEDs would be illuminated. In a proposed embodiment, it would be possible for the illumination to be initiated from a bottom left corner and then diagonally until the whole square is illuminated.

A problem with the alternative proposal suggested above is that it creates difficulty in terms of providing a numerical representation. In a preferred embodiment, the first indicator and the second indicator relate to a shared scale 703. In this way, it is possible for a quick comparison to be made of the amount of power being generated and the amount of power being consumed. With the two values being shown against a shared scale, it is clear to see which of the two is the greater, that is to say whether the occupier has achieved a preferred condition in which more power is being generated than the degree of power being consumed.

As previously stated, it is preferred for the shared scale 703 to be non-linear, with greater emphasis being placed on the lower levels and lesser emphasis being placed on the higher levels. Thus, in the preferred embodiment shown in Figure 7, the first three LEDs to be illuminated represent a range of zero watt to 20 watt. The next three represent a range of 20 watt to 50 watt, the next three represent a range of 50 watt to 100 watt, the next three represent a range of 100 watt to 200 watt, the next three represent a range of 200 watt to 500 watt, the next three 500 watt to 1 kilowatt, the next three 1 kilowatt to 2 kilowatt, the next three 2 kilowatt to 5 kilowatt, the next three 5 kilowatt to 10 kilowatt and the final three from 10 kilowatt to 20 kilowatt. Thus, in this preferred embodiment using this logarithmic approach, it is possible to show relatively low levels of power generation and power consumption on a shared scale, where it is also possible to show relatively high levels of power consumption; it being appreciated that high levels of power consumption will occur when, for example, cooking or heating water etc.

In alternative approaches to achieving a similar effect, without using a non-linear scale, it would be possible to change the total range of the scale such that the full-scale could represent 1 kilowatt of power when this is considered to be appropriate or, alternatively, a full-scale could represent 10 kilowatt or 50 kilowatt etc. Appropriate re-labelling of the scale would be necessary, although with an appropriate display this would be possible. However, it is understood by the inventor that the logarithmic representation as shown in the preferred embodiment of Figure 7 represents a preferred approach in that it places fewer demands on the capabilities of the user.

A further alternative approach would be to use rings of rotating LEDs. Thus, in accordance with this approach, having reached the full-scale of, say 10 kilowatt, the dial of LEDs would effectively lap and result in a second run of LEDs being illuminated. Thus, a first lap could show usage from zero to 10 kilowatt with a second lap showing usage from 10 to 20 kilowatt. Again, the inventor is of the opinion that such a solution is less advantageous than the logarithmic approach adopted by the preferred embodiment of Figure 7.

In addition to the LED loci previously described, additional displays are also provided, selected by the operation of an appropriate button as previously described. As described with respect to Figure 6, it is possible for one embodiment to modify the nature of the display such that it represents an average energy generation/consumption as distinct from instantaneous power.

In a preferred embodiment, a button 704 is present such that when pressed a display illuminates showing the total generation of energy over a predetermined period. The period in question is identified by display 704 which, in this example, shows the Figure "30", representing a duration of 30 days. Thus, on activating button 704, in this example, a numerical representation may be provided in the centre of the display (within circle 701 and 702) showing the amount of power generated over the last 30 days. However, when not activated, it is preferable for an outer cover of the display to present a smoked appearance such that the additional display (such as one constructed from seven-segment elements) is not visible.

In a preferred embodiment, an additional button 706 is provided such that when activated a percentage figure of power generated to power consumed is displayed, again preferably within the central region of the display. Again, this may be averaged over the displayed 30 day period.

### Figure 8

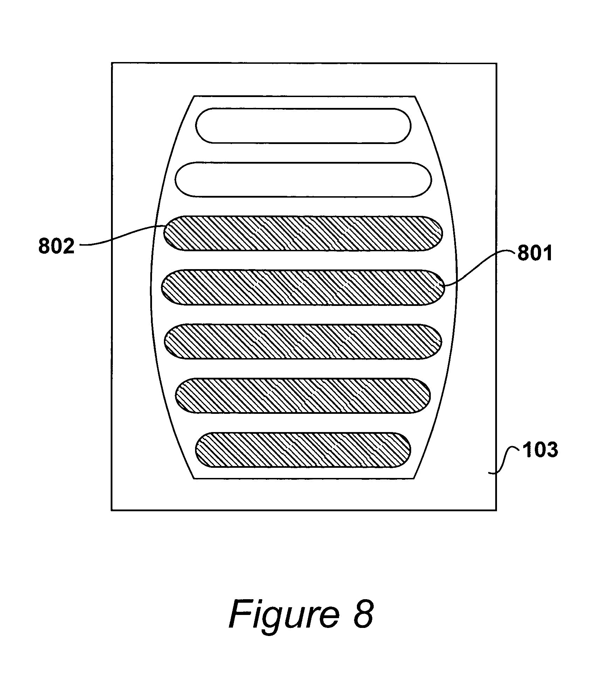

An example of solar thermal display 103 is shown in Figure 8. Display 103 also includes light emitting diodes and in this example, may emit blue light (representing cold water) or red light, representing hot water. The LED displays are arranged in segments such that any particular segment may be shown as being blue (cold) or red (hot).

The general configuration is so as to represent a tank 801 of hot water. The temperature of the water contained in the tank is indicated by a proportion of red regions to blue regions, with blue regions being towards the bottom and red regions being towards the top. In this example, a total of seven segments 802 are provided. At any instant, an interface exists such at that all segments above the interface are red and all segments below the interface are blue. For the purposes of illustration, two shaded segments 802 represent hot red segments with the remainder representing blue cold segments. Thus, this illustration represents a condition where the water is relatively cold.

In a preferred embodiment, it is also possible for the LED segments to represent an animated periodic colour change when heated liquid is being pumped from a solar collector. Thus, in this way, it is possible to see when energy is being generated such that this could possibly identify a time when it would be preferable to draw hot water. Similarly, if a static display is seen it will be appreciated that any further heat supplied to the water tank will be derived from an external source and therefore the pulling of water could be discouraged.

## Claims

1. Display apparatus, comprising a first indicator (701) configured to indicate a level of energy/power consumption, and
a second indicator (702) configured to indicate a level of energy/power generation;
**characterised in that:**
said first indicator and said second indicator are arranged in close proximity to facilitate a comparison between power consumption and power generation; and
said first indicator and/or said second indicator are shown against a non-linear scale that gives greater emphasis to lower levels and lesser emphasis to higher levels.

2. Apparatus according to claim 1, **characterised in that** said non-linear scale is logarithmic.

3. Apparatus according to claim 1 or claim 2, **characterised in that** said first indicator for consumption shares the same non-linear scale with said second indicator for generation.

4. Apparatus according to any of claims 1 to 3, **characterised in that** said first indicator and said second indicator are each implemented as a set of light emitting devices, wherein a level of generation or consumption is indicated by illuminating an appropriate number of the said light emitting devices from the appropriate set.

5. Apparatus according to claim 4, **characterised in that** generation is indicated by devices emitting light of a first colour and consumption is indicated by devices emitting light of a second colour.

6. Apparatus according to claim 4 or claim 5, wherein the light emitting device are light emitting diodes.

7. Apparatus according to claim 3, **characterised in that** said shared scale is substantially curved.

8. Apparatus according to claim 7, **characterised in that** said curved scale is substantially circular.

9. Apparatus according to any of claims 1 to 8, **characterised in that** a first display mode shows instantaneous power generation/consumption and a second display mode shows energy generation/consumption over a period of time.

10. Apparatus according to any of claims 1 to 10, **characterised by** an additional numerical display (705) for showing a numerical value of power/energy generation/consumption.

11. Apparatus according to any of claims 1 to 10, **characterised in that** said generation involves that generation of electrical energy using photo-voltaic technology (203).

12. Apparatus according to any of claims 1 to 11, **characterised by** the inclusion of a second display (103) indicating solar-thermal generation.

13. Apparatus according to claim 12, **characterised in that** said second display represents a tank of hot water (801), the temperature of which is indicated by a proportion of an indicator of a first colour shown with respect to a complementary indicator of a second colour.

14. Apparatus according to claim 13 or claim 14, wherein said display presents an animated periodic colour change when heated liquid is being pumped from a solar collector.

15. A method of displaying energy/power consumption and energy/power generation, comprising the steps of:
indicating a level of energy/power consumption by means of a first indicator; and
indicating a level of energy/power generation by means of a second indicator;
**characterised by**:
arranging said first indicator and said second indicator in close proximity to facilitate a comparison between power consumption and power generation; and
showing said first indicator and/or said second indicator against a non-linear scale that gives greater emphasis to lower levels and lesser emphasis to higher levels.

16. A method according to claim 15, characterise by showing said first indicator and/or said second indicator against a logarithmic scale.

17. A method according to claim 15 or claim 16, **characterised by** sharing the same non-linear scale between said first indicator for consumption and said secind indicator for generation.

18. A method according to any of claims 15 to 17, **characterised by** including a second display indicating solar-thermal generation.
